# FASCICULE DE BREVET EUROPEEN

(11) **EP 0 725 226 B1**
(45) Date de publication et mention de la délivrance du brevet: **08.09.1999**
(21) Numéro de dépôt: 96400118.4
(22) Date de dépôt: 18.01.1996
(51) Int. Cl.: F16D 65/16

(54) **Frein à disque à absorption réduite**
Scheibenbremse mit verringerter Absorption
Disc brake with reduced absorption

(30) Priorité: 31.01.1995 FR 9501053
(43) Date de publication de la demande: 07.08.1996
(73) Titulaire: Bosch Systemes de Freinage, 93700 Drancy (FR)
(72) Inventeur: Le Deit, Gérard, F-77181 Courtry (FR); Gerard, Jean-Louis, F-93170 Bagnolet (FR)
(74) Mandataire: Bentz, Jean-Paul

(56) Documents cités:
- WO-A-92/08898
- DE-A- 4 116 502
- US-A- 1 865 105
- US-A- 4 303 146
- US-A- 4 428 462
- PATENT ABSTRACTS OF JAPAN vol. 5, no. 112 (M-079), 21 Juillet 1981 & JP-A-56 052634 (MITSUBISHI MOTORS)
- EUREKA, vol. 13, no. 2, Février 1993, KENT GB, page 19 XP000349790

## Description

La présente invention concerne les freins à disque du type de ceux qui sont utilisés pour assurer le freinage des véhicules automobiles.

De tels freins à disque sont bien connus dans la technique automobile, et comportent généralement un étrier chevauchant un disque de frein, l'étrier comportant des moyens d'actionnement susceptibles de solliciter au moins un élément de friction contre une face d'un disque tournant.

On connaît, par exemple du document US-A-4 161 239, un frein à disque de ce type, dans lequel les moyens d'actionnement comprennent un cylindre solidaire de l'étrier et présentant un premier et un second alésages à l'intérieur desquels coulissent de façon étanche respectivement des premier et second pistons concentriques sélectivement actionnés par la pression d'un fluide hydraulique, le premier alésage ayant un diamètre inférieur à celui du deuxième alésage, les premier et second pistons délimitant respectivement de façon étanche des première et seconde chambres, une entrée de fluide hydraulique débouchant dans la première chambre.

Une telle disposition a pour but de pouvoir actionner le frein à disque en admettant du fluide hydraulique sous pression dans la première et/ou la seconde chambre, c'est à dire en alimentant le frein à disque par deux circuits hydrauliques indépendants reliés chacun à une des chambres du cylindre. On assure ainsi la sécurité de fonctionnement du frein à disque, en cas de défaillance de l'un des circuits hydrauliques.

Cependant, ce frein à disque présente les mêmes inconvénients que les freins à disque plus conventionnels, qui ne possèdent qu'une seule chambre pour actionner un piston unique. En particulier, à la fin d'une action de freinage, le recul du piston dans son alésage ne peut être assuré de façon complète, de sorte que les éléments de friction peuvent rester en contact avec le disque de frein. Il en résulte ce qu'il est convenu d'appeler dans la technique une «traînée» donnant naissance à un « couple résiduel», qui a pour effet de provoquer une usure prématurée des éléments de friction et du disque, de ralentir le véhicule et d'augmenter sa consommation en carburant.

Différentes solutions ont déjà été proposées pour améliorer le recul du piston dans le cylindre à la fin du freinage, en utilisant par exemple des ressorts, disposés à différents endroits, et restituant à la fin du freinage une énergie qu'ils ont absorbé au début du freinage pour se déformer. Ces solutions présentent encore des inconvénients, en ce sens que l'hystérésis du frein à disque se trouve augmentée dans une large mesure.

Toutefois, le recul du piston étant augmenté, il s'ensuit que la course du piston au début d'une action de freinage se trouve également augmentée. Il faut donc alimenter le frein à disque avec un volume de fluide hydraulique plus important pour amener les éléments de friction en contact avec le disque de frein. Une telle augmentation de l'absorption du frein à disque en fluide hydraulique conduit à surdimensionner le maître-cylindre commandant le circuit de freinage, donc à augmenter la force nécessaire pour actionner ce maître-cylindre, et donc à surdimensionner le dispositif d'assistance au freinage, en général un servomoteur pneumatique.

On connaît également du document DE-A-4 116 502, correspondant au préambule de la revendication principale un frein à disque dans lequel l'étrier est formé avec un alésage étagé dans lequel coulisse un piston étagé. Lorsqu'un fluide sous pression est admis dans cet alésage, ce fluide exerce sur la section de plus petit diamètre du piston étagé une force qui le fait avancer vers le disque de frein, de façon à amener rapidement les éléments de friction en contact avec ce disque. Pour permettre le mouvement de la partie du piston de plus grand diamètre, la chambre délimitée entre les épaulements de l'alésage et du piston est reliée à un réservoir de compensation par l'intermédiaire d'une valve qui s'ouvre lorsque la pression du fluide fourni au frein dépasse une certaine valeur, de telle façon que cette pression s'exerce sur la section de plus grand diamètre du piston et procure une force de freinage élevée.

La valve utilisée est constituée d'un clapet à lèvre, dont la lèvre se déforme et découvre une ouverture lorsque la pression du fluide est supérieure à une valeur prédéterminée. Il s'ensuit que ce clapet à lèvre s'use très rapidement, et ne remplit plus son office, empêchant ainsi un fonctionnement normal du frein à disque.

La présente invention a donc pour but de proposer un frein à disque du type rappelé ci-dessus, dont l'absorption en fluide hydraulique soit réduite, tout en ayant une traînée également réduite ou nulle, et en utilisant des moyens simples pour ne pas augmenter le coût du frein à disque, et fiables.

Dans ce but, l'invention propose un frein à disque, comportant un étrier chevauchant un disque de frein, l'étrier comportant des moyens d'actionnement, susceptibles de solliciter au moins un élément de friction contre une face du disque de frein, ces moyens d'actionnement comprenant un cylindre solidaire de l'étrier présentant un premier et un second alésages à l'intérieur desquels coulissent de façon étanche respectivement des premier et second pistons concentriques sélectivement actionnés par la pression d'un fluide hydraulique, le premier alésage ayant un diamètre inférieur à celui du deuxième alésage, les premier et second pistons délimitant respectivement de façon étanche des première et seconde chambres, un conduit d'entrée de fluide hydraulique débouchant dans la première chambre, la seconde chambre étant reliée à l'entrée de fluide par un passage ménagé à travers le premier piston et contrôlé par un clapet fermé lorsque la pression dans la première chambre est inférieure à une pression prédéterminée dans une première phase de fonctionnement du frein à disque, et ouvert lorsque la pression dans la première chambre est supérieure à cette pression prédéterminée dans une deuxième phase de fonctionnement du frein à disque, la seconde chambre étant reliée à un réservoir de fluide hydraulique sous basse pression par l'intermédiaire d'un clapet anti-retour n'autorisant que la communication du réservoir de fluide sous basse pression vers la seconde chambre.

Selon l'invention, le clapet comporte une tête sollicitée par un ressort en direction d'un siège de clapet formé sur le premier piston et un pied retenu prisonnier d'une cavité formée dans le second piston.

L'invention sera mieux comprise, et d'autres buts, caractéristiques et avantages apparaîtront clairement de la description qui va maintenant être faite d'un exemple de mode de réalisation donné à titre non limitatif, en référence aux dessins annexés dans lesquels :
- La Figure 1 est une vue en coupe d'un frein à disque réalisé conformément à la présente invention, et
- La Figure 2 est une vue agrandie en coupe d'une partie II de la Figure 1.

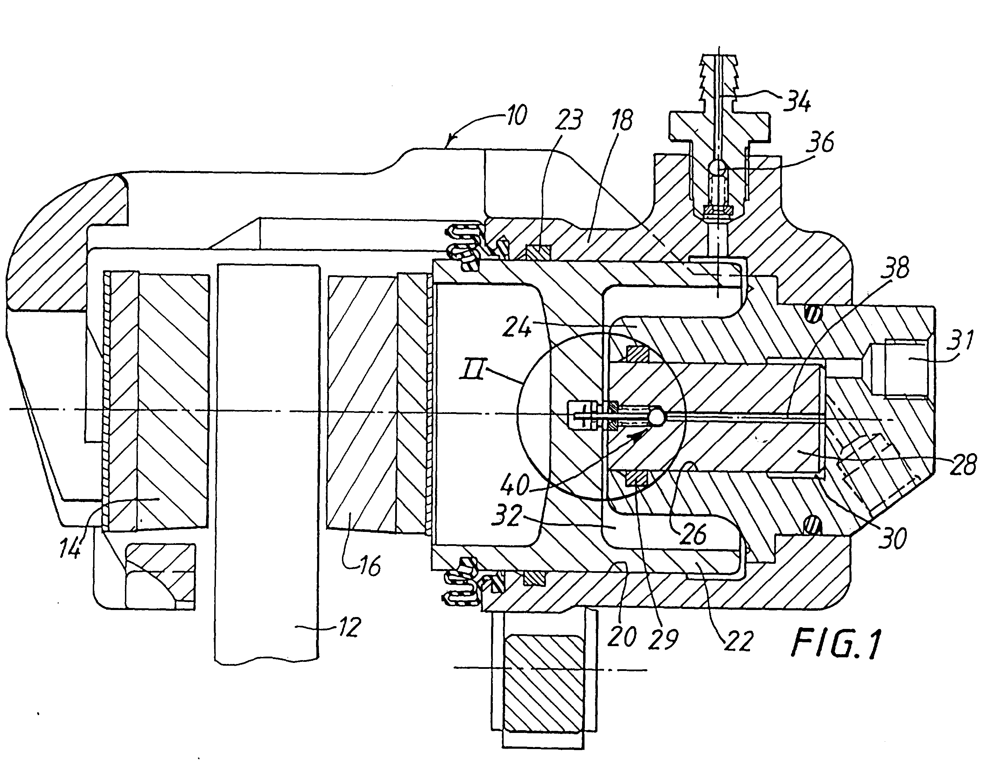

On reconnaît sur la Figure 1 un frein à disque, qui comporte de façon classique un étrier 10 chevauchant un disque 12 et deux éléments de friction 14 et 16, l'étrier 10 comportant des moyens d'actionnement pour amener l'élément de friction 16 directement en contact d'une face du disque 12 et l'autre élément de friction 14 par réaction contre l'autre face du disque 12.

Ces moyens d'actionnement comprennent un cylindre 18 solidaire de l'étrier 10, formé avec un alésage 20 dans lequel peut coulisser un piston 22, un joint carré 23 logé dans une gorge en M de l'alésage 20 assurant l'étanchéité de ce coulissement. Le cylindre 18 comporte également une cloison interne cylindrique fixe 24, solidaire du fond de l'alésage 20, formant un alésage 26, de préférence concentrique avec l'alésage 20, et dans lequel peut coulisser un piston 28, un joint carré 29 logé dans une gorge en M de l'alésage 26 assurant l'étanchéité de ce coulissement.

Le piston 28 délimite avec l'intérieur de l'alésage 26 de la cloison 24 une chambre 30, dans laquelle débouche un conduit d'entrée 31 destiné à être relié à une source de fluide sous pression, telle qu'un maître-cylindre (non représenté) commandant le circuit de freinage d'un véhicule automobile.

Le piston 22 délimite avec l'intérieur de l'alésage 20 et la paroi extérieure de la cloison 24 une chambre 32, reliée par un conduit 34 à un réservoir de fluide sous basse pression (non représenté). Un clapet anti-retour 36 très faiblement taré est disposé dans le conduit 34, de façon à autoriser la communication du réservoir vers la chambre 32 et à l'interdire de la chambre 32 vers le réservoir.

Le piston 28 est formé avec un passage axial 38, susceptible de faire communiquer les chambres 30 et 32 selon la position d'un clapet taré 40 disposé dans ce passage 38.

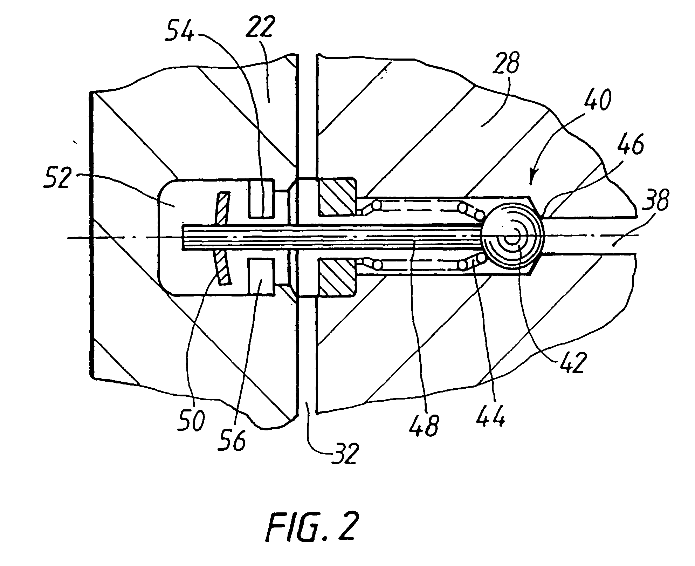

Le clapet 40, représenté plus en détail sur la Figure 2, est formé d'une tête 42, chargée par un ressort 44 dans le sens de la fermeture en appui sur un siège de clapet 46 formé sur le piston 28, d'une tige 48 s'étendant axialement vers l'avant hors du passage 38 et pouvant coulisser librement dans ce passage 38, et d'un pied 50 s'étendant radialement à l'extrémité avant de la tige 48.

Le pied 50 est reçu dans une cavité 52 formée dans la paroi intérieure du piston 22, la tige 48 traversant librement une ouverture 54, formée dans une rondelle 56 solidaire du piston 22 à l'arrière de la cavité 52, et de diamètre inférieur à celui du pied 50, de sorte que ce dernier reste prisonnier de cette cavité 52.

Le frein à disque qui vient d'être décrit fonctionne de la façon suivante. Au repos, tous les éléments mobiles occupent la position représentée sur la Figure. En particulier, les clapets 36 et 40 sont fermés, et les pistons 22 et 28 sont en butée l'un sur l'autre.

Par convention, on appelle « avant » la direction correspondant à l'actionnement du frein, et « arrière » la direction correspondant au retour en position de repos. Sur les Figures, l'avant est ainsi à gauche et l'arrière à droite.

Lors d'une action de freinage, du fluide hydraulique sous pression est fourni par le maître-cylindre au conduit d'entrée 31 et fait augmenter la pression dans la chambre 30. Le clapet 40 étant taré pour ne pas s'ouvrir dans cette première phase de fonctionnement, la pression dans la chambre 30 s'exerce alors sur le piston 28 pour le faire avancer.

Le piston 28 étant en butée sur le piston 22 fait à son tour avancer le piston 22. Il en résulte une augmentation de volume de la chambre 32, accompagnée d'une réduction de pression dans cette chambre, qui provoque l'ouverture du clapet anti-retour 36, de sorte que du fluide hydraulique est aspiré du réservoir de fluide sous basse pression vers la chambre 32, et que les pistons 22 et 28 peuvent avancer ensemble.

Cette première phase de fonctionnement du frein à disque, pendant laquelle les éléments de friction sont amenés au contact des faces du disque de frein, se poursuit jusqu'à ce que les éléments de friction 14 et 16 arrivent effectivement au contact des faces du disque 12. A ce moment, la pression dans la chambre 30 a atteint une valeur P₁, et le piston 22 rencontre une résistance mécanique importante, transmise au piston 28 qui est encore en appui sur lui.

Il en résulte alors une augmentation de la pression dans la chambre 30. La précontrainte au repos du ressort 44 étant prédéterminée pour que le clapet 40 s'ouvre pour une valeur de la pression hydraulique s'exerçant sur la surface de la tête 42 obturant le passage 38 sensiblement égale à P₁, il se produit également une augmentation de pression dans la chambre 32.

Cette augmentation de pression dans la chambre 32 provoque la fermeture du clapet anti-retour 36, de sorte que la pression du fluide transmis par le conduit d'entrée 31 et par le passage 38 après ouverture du clapet 40 s'exerce alors sur toute la section du piston 22 dans l'alésage 20.

Les éléments de friction 14 et 16 étant déjà au contact des faces du disque 12, l'augmentation de l'effort de freinage sera alors obtenue par une augmentation de la pression dans les chambres 30 et 32, dont le volume est très peu variable dans cette deuxième phase de fonctionnement du frein à disque, correspondant à une action de freinage effectif. L'absorption du frein à disque en fluide est donc très faible dans cette deuxième phase, et n'est dûe qu'aux déformations mécaniques de l'étrier 10 et des éléments de friction 14 et 16, de la même façon que pour un frein à disque de l'art antérieur.

Lorsque le conducteur du véhicule désire mettre fin à l'action de freinage, il relâche sa pression sur la pédale de frein. Il en résulte une baisse de pression dans le maître-cylindre, transmise par le conduit d'entrée 31 à la chambre 30.

Lorsque la pression dans la chambre 30 diminue en dessous de la valeur P₁, cela provoque d'abord la fermeture du clapet taré 40, puis le recul du piston 28 dans l'alésage 26. Dans ce mouvement vers l'arrière du piston 28, le pied 50 du clapet 40 vient en butée sur la rondelle 56 et reste prisonnier de la cavité 52 du piston 22.

Il en résulte que la tête 42 du clapet se trouve éloignée du siège de clapet 46 par la tige 48, à l'encontre de l'action du ressort 44, le pied 50 forçant ainsi l'ouverture du clapet 50 lorsque la pression dans la première chambre 30 redevient inférieure à la pression P₁ dans cette troisième phase de fonctionnement du frein à disque, correspondant à ce qu'il est convenu d'appeler un « défreinage ».

La chambre 32 communique donc avec la chambre 30, de sorte que la baisse de pression dans la chambre 30 en dessous de la valeur P₁ est également transmise à la chambre 32 par le passage 38, et provoque à son tour le recul du piston 22.

Les joints carrés 23 et 29 dans les gorges en M des alésages 20 et 26 participent également au recul des pistons 22 et 28, en restituant dans cette troisième phase l'énergie qu'ils ont absorbé au cours de la première phase en se déformant par suite des frottements avec les pistons 22 et 28. Les pistons 22 et 28 sont ainsi soumis à deux forces dirigées vers l'arrière, une d'origine hydraulique et une d'origine mécanique.

Dans cette troisième phase, le clapet anti-retour 36 reste fermé tant que la pression dans la chambre 32 n'est pas sensiblement égale à la pression régnant dans le réservoir de fluide sous basse pression, c'est à dire tant que la pression dans le maître-cylindre relié au conduit d'entrée 31 n'est pas égale à cette pression, c'est à dire encore tant que le piston 22 n'a pas repris sa position initiale de repos représentée sur la Figure 1.

On voit donc bien que l'on a réalisé un frein à disque, dans lequel l'absorption en fluide hydraulique est réduite, et en utilisant des moyens fiables. En effet, la première phase de fonctionnement du frein à disque, pendant laquelle les éléments de friction sont amenés au contact des faces du disque de frein, s'effectue sous l'effet de la seule augmentation de pression dans la chambre 30, la pression dans la chambre 32 restant sensiblement égale à la pression du réservoir de fluide sous basse pression, grâce à l'ouverture du clapet anti-retour 36 dans cette phase et à la fermeture du clapet taré 40.

Le volume de fluide nécessaire pour faire avancer les pistons 28 et 22 est donc égal au volume de fluide nécessaire pour faire avancer le seul piston 28, notablement inférieur au volume de fluide qui est nécessaire pour faire avancer de la même distance le piston 22 des freins à disque de l'art antérieur.

Autrement dit, par rapport à un frein à disque de l'art antérieur, pour une absorption identique, on obtient une course d'approche des éléments de friction plus importante, ou ce qui revient au même, une absorption inférieure pour une course d'approche identique.

On comprend donc que l'on pourra donner au piston 28, et à l'alésage 26, une section de valeur prédéterminée pour que l'absorption en fluide du frein à disque soit égale à toute valeur prédéterminée, et aussi réduite qu'on le désire.

De plus, grâce à l'ouverture forcée du clapet 40 dans la troisième phase de fonctionnement du frein à disque, on est assuré de mettre en communication les chambres 30 et 32, et donc de faire baisser la pression dans la chambre 32, et donc de ramener en particulier le piston 22 dans sa position de repos initiale, cette action hydraulique étant avantageusement combinée à l'action mécanique des joints carrés 23 et 29 dans leurs gorges en M respectives.

On pourra donc, dans cette troisième phase de défreinage, faire parcourir au piston 22 une course de recul suffisante pour être assuré que les éléments de friction 14 et 16 ne soient plus au contact des faces du disque 12, et donc que la traînée du frein à disque est réduite, ou même nulle.

On a donc bien réalisé un frein à disque n'ayant qu'une absorption en fluide hydraulique faible, tout en permettant, par des courses d'approche et de recul importantes, d'obtenir une traînée faible ou nulle, et en n'utilisant que des moyens fiables.

## Revendications

1. Frein à disque, comportant un étrier (10) chevauchant un disque de frein (12), l'étrier (10) comportant des moyens d'actionnement susceptibles de solliciter au moins un élément de friction (14,16) contre une face du disque de frein (12), ces moyens d'actionnement comprenant un cylindre (18) solidaire de l'étrier (10) présentant un premier (26) et un second (20) alésages à l'intérieur desquels coulissent de façon étanche respectivement des premier (28) et second (22) pistons concentriques sélectivement actionnés par la pression d'un fluide hydraulique, le premier alésage (26) ayant un diamètre inférieur à celui du deuxième alésage (20), les premier (28) et second (22) pistons délimitant respectivement de façon étanche des première (30) et seconde chambres (32), un conduit d'entrée de fluide hydraulique (31) débouchant dans la première chambre (30), la seconde chambre (32) étant reliée à l'entrée de fluide (31) par un passage (38) ménagé à travers le premier piston (28) et contrôlé par un clapet (40) fermé lorsque la pression dans la première chambre (30) est inférieure à une pression prédéterminée (P₁) dans une première phase de fonctionnement du frein à disque, et ouvert lorsque la pression dans la première chambre (30) est supérieure à cette pression prédéterminée (P₁) dans une deuxième phase de fonctionnement du frein à disque, la seconde chambre (32) étant reliée à un réservoir de fluide hydraulique sous basse pression par l'intermédiaire d'un clapet anti-retour (36) n'autorisant que la communication du réservoir de fluide sous basse pression vers la seconde chambre (32), caractérisé en ce que le clapet (40) comporte une tête (42) sollicitée par un ressort (44) en direction d'un siège de clapet (46) formé sur le premier piston (28) et un pied (50) retenu prisonnier d'une cavité (52) formée dans le second piston (22).

2. Frein à disque selon la revendication 1, caractérisé en ce que le pied (50) force l'ouverture du clapet (50) lorsque la pression dans la première chambre (30) est inférieure à la pression prédéterminée (P₁) dans une troisième phase de fonctionnement du frein à disque.

3. Frein à disque selon l'une des revendications précédentes, caractérisé en ce que l'étanchéité du coulissement des premier (28) et second (22) pistons dans les premier (26) et second (20) alésages est assurée par des joints carrés (29,23) dans des gorges en M des premier(26) et second (20) alésages.

4. Frein à disque selon l'une des revendications précédentes, caractérisé en ce que la pression prédéterminé (P₁) est égale à la pression dans la première chambre (30) pour laquelle les éléments de friction (14,16) sont amenés de leur position de repos au contact des faces du disque tournant (12).

## Patentansprüche

1. Scheibenbremse mit einem Bremssattel(10), der eine Bremsscheibe (12) umgreift, wobei der Bremssattel (10) Betätigungsmittel enthält, welche imstande sind, wenigstens ein Reibungselement (14, 16) gegen eine Fläche der Bremsscheibe (12) zu pressen, wobei diese Betätigungsmittel einen mit dem Bremssattel (10) fest verbundenen Zylinder (18) umfaßt, welcher eine erste Bohrung (26) und eine zweite Bohrung (20) aufweist, in deren Inneren auf dichte Weise ein erster (28) bzw. ein zweiter (22) von zwei konzentrischen Kolben gleitet, die selektiv vom Druck eines hydraulischen Fluids angetrieben werden, wobei die erste Bohrung (26) einen kleineren Durchmesser hat als die zweite Bohrung (20), wobei der erste (28) bzw. der zweite (22) der Kolben auf dichte Weise eine erste (30) bzw. eine zweite (32) Kammer begrenzt, wobei ein Eintrittskanal (31) für das Hydraulikfluid in die erste Kammer (30) mündet, wobei die zweite Kammer (32) an den Eintrittskanal (31) für das Fluid durch einen Durchgang (38) angeschlossen ist, der den ersten Kolben (28) durchquert und von einem Ventilelement (40) kontrolliert ist, das geschlossen ist, wenn in einer ersten Phase des Funktionsablaufs der Scheibenbremse der Druck in der ersten Kammer (30) kleiner als ein vorbestimmter Druck (P1) ist, und das Ventil offen ist, wenn in einer zweiten Phase des Funktionsablaufs der Scheibenbremse der Druck in der ersten Kammer (30) größer ist als dieser vorbestimmte Druck (P1), wobei die zweite Kammer (32) mittels eines Rückschlagventils (36) an ein Niederdruckfluidreservoir angeschlossen ist, welches nur die Verbindung vom Niederdruckfluidreservoir zur zweiten Kammer (32) erlaubt, dadurch gekennzeichnet, daß das Ventilelement (40) einen Kopf (42) aufweist, der von einer Feder (44) in Richtung eines auf dem ersten Kolben (28) ausgebildeten Ventilsitzes (46) beaufschlagt wird, und einen Fuß (50) aufweist, der von einer im zweiten Kolben (22) ausgebildeten Ausnehmung (52) eingeschlossen ist.

2. Scheibenbremse nach Anspruch 1, dadurch gekennzeichnet, daß der Fuß (50) das Öffnen des Ventils (40) erzwingt, wenn in einer dritten Phase des Funktionsablaufs der Scheibenbremse der Druck in der ersten Kammer (30) kleiner ist als der vorbestimmte Druck (P1).

3. Scheibenbremse nach einem der vorhergehenden Ansprüche, dadurch gekennzeichnet, daß die Abdichtung der Gleitbewegungen des ersten (28) und zweiten (22) der Kolben in der ersten (26) und zweiten (20) der Bohrungen durch Vierkantdichtungen (29, 23) in M-förmigen Vertiefungen in der ersten (26) und zweiten (20) der Bohrungen gewährleistet ist.

4. Scheibenbremse nach einem der vorhergehenden Ansprüche, dadurch gekennzeichnet, daß der vorbestimmte Druck (P1) gleich dem Druck in der ersten Kammer (30) ist, bei dem die Reibungselemente (14, 16) aus ihrer Ruhestellung mit den Flächen der Bremsscheibe (12) in Kontakt gebracht werden.

## Claims

1. Disk-brake including a caliper (10) straddling a brake disk (12), the caliper (10) including actuating means capable of urging at least one friction pad (14, 16) against one face of the brake disk (12), these actuating means comprising a cylinder (18) secured to the caliper (10) having a first bore (26) and a second bore (20) inside which a first piston (28) and a second piston (22) respectively slide in leaktight fashion, these pistons being concentric and selectively actuated by the pressure of a hydraulic fluid, the first bore (26) having a diameter which is smaller than that of the second bore (20), the first piston (28) and second piston (22) respectively delimiting in leaktight fashion a first chamber (30) and a second chamber (32), a hydraulic fluid inlet pipe (31) emerging in the first chamber (30), the second chamber (32) being connected to the fluid inlet (31) by a passage (38) made through the first piston (28) and controlled by a valve (40) which is closed when the pressure in the first chamber (30) is less than a predetermined pressure (P₁) in a first operating phase of the disk-brake, and open when the pressure in the first chamber (30) is greater than this predetermined pressure (P₁) in a second operating phase of the disk-brake, the second chamber (32) being connected to a low pressure hydraulic fluid reservoir via a non-return valve (36) allowing only communication from the low pressure fluid reservoir toward the second chamber (32), characterized in that the valve (40) includes a head (42) urged by a spring (44) in the direction of a valve seat (46) formed on the first piston (28) and a foot (50) held captive in a cavity (52) formed in the second piston (22).

2. Disk-brake according to claim 1, characterized in that the foot (50) forces the valve (50) to open when the pressure in the first chamber (30) is less than the predetermined pressure (P₁) in a third operating phase of the disk-brake.

3. Disk-brake according to any of the preceding claims, characterized in that the sliding of the first (28) and second (22) pistons in the first (26) and second (20) bores is made leaktight by square seals (29, 23) in M-shaped grooves in the first (26) and second (20) bores.

4. Disk-brake according to any of the preceding claims, characterized in that the predetermined pressure (P₁) is equal to the pressure in the first chamber (30) for which the friction pads (14, 16) are brought from their position of rest into contact with the faces of the rotating disk (12).
